# EUROPÄISCHE PATENTSCHRIFT

(11) **EP 3 090 014 B1**
(45) Veröffentlichungstag und Bekanntmachung des Hinweises auf die Patenterteilung: **27.02.2019**
(21) Anmeldenummer: 14823971.8
(22) Anmeldetag: 17.12.2014
(51) Int. Cl.: C08J 9/00, C08J 9/02, C08J 9/14

(54) **ZUSAMMENSETZUNG GEEIGNET ZUR HERSTELLUNG VON POLYURETHAN- ODER POLYISOCYANURAT-HARTSCHAUMSTOFFEN**
COMPOSITION SUITABLE FOR PREPARING POLYURETHANE OR POLYISOCYANURATE RIGID FOAMS
COMPOSITION PERMETTANT DE PRODUIRE DES MOUSSES DURES DE POLYURÉTHANE OU DE POLYISOCYANURATE

(30) Priorität: 30.12.2013 US 201361921921 P
(43) Veröffentlichungstag der Anmeldung: 09.11.2016
(73) Patentinhaber: Evonik Degussa GmbH, 45128 Essen (DE)
(72) Erfinder: DIENDORF, Jörg, 45149 Essen (DE); GEILING III, Raymond M, Richmond, Virginia 23225 (US); EILBRACHT, Christian, 44627 Herne (DE); FERENZ, Michael, 45147 Essen (DE)
(74) Vertreter: Evonik Patent Association
(86) Internationale Anmeldenummer: PCT/EP2014/078183
(87) Internationale Veröffentlichungsnummer: WO 2015/101497

(56) Entgegenhaltungen:
- EP-A1- 0 148 576
- EP-A1- 2 465 892
- EP-A2- 0 499 200

## Beschreibung

Gegenstand der vorliegenden Erfindung ist eine Zusammensetzung, die zur Herstellung von Polyurethan- oder Polyisocyanurat-Hartschaumstoffen geeignet ist, enthaltend zumindest eine Isocyanatkomponente, zumindest eine Isocyanat-reaktive Komponente, die vorzugsweise eine Polyolkomponente ist, zumindest einen Schaumstabilisator, zumindest einen Urethan- und/oder Isocyanurat-Katalysator, optional Wasser und/oder Treibmittel, und optional zumindest ein Flammschutzmittel und/oder weitere Additive, welche sich dadurch auszeichnet, dass sie als Schaumstabilisatoren mindestens zwei verschiedene Sorten 1 und 2 von Polyethersiloxanen aufweisen, und die Verwendung dieser Zusammensetzung zur Herstellung von Polyurethan- oder Polyisocyanurat-Schaumstoffen, bevorzugt Hartschaumstoffen.

Bei der Herstellung von Polyurethan- und Polyisocyanurat-Hartschaumstoffen werden zellstabilisierende Additive eingesetzt, welche für eine feinzellige, gleichmäßige und störungsarme Schaumstruktur sorgen sollen und damit die Gebrauchseigenschaften, besonders das thermische Isolationsvermögen des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen. In verschiedenen Veröffentlichungen wurden solche Schaumstabilisatoren für Hartschaum-Anwendungen bereits publiziert.

EP 0 570 174 B1 beschreibt ein Polyethersiloxan der Struktur (CH₃)₃SiO[SiO(CH₃)₂]ₓ [SiO(CH₃)R]_{y}Si(CH₃)₃, dessen Reste R aus einem über eine SiC-Bindung an das Siloxan geknüpften Polyethylenoxid bestehen, welches am anderen Kettenende durch eine C₁C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der Fluorchlorkohlenwasserstoff-Treibmittel sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0 533 202 A1 Polyethersiloxane des Strukturtyps (CH₃)₃SiO[SiO(CH₃)₂]ₓ[SiO(CH₃)R]_{y}Si(CH₃)₃. Die Reste R bestehen hier aus SiCgebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

Neuere Entwicklungen bei der Herstellung von Polyurethan-Hartschäumen bestehen darin, ganz auf halogenierte Kohlenwasserstoffe als Treibmittel zu verzichten und stattdessen Kohlenwasserstoffe wie Pentan einzusetzen. So beschreibt die EP 1 544 235 die Herstellung von Polyurethanhartschäumen unter Verwendung von Kohlenwasserstoff-Treibmitteln und Polyethersiloxanen der bereits bekannten Struktur (CH₃)₃SiO[SiO(CH₃)_{2]x[}SiO(CH₃)R]_{y}Si(CH₃)₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

Die Verwendung von Schaumstabilisatoren verbessert, wie bereits beschrieben, die Gebrauchseigenschaften der Polyurethanschäume, beispielsweise die Isolationsleistung und die Oberflächeneigenschaften. Daneben wäre jedoch auch eine Verbesserung der Verarbeitungseigenschaften wünschenswert. Bei der Verwendung von Apparaturen zur Applikation der Reaktionsmischung (Nieder- bzw. Hochdruck-Verschäumungsmaschinen) kann sich die Austragsdüse durch einen Aufbau von reagierender Reaktionsmischung zusetzen, vor allem bei kontinuierlichen Anwendungen und bei der Anwendung als Sprühschaum. Dies ist vor allem bei hochkatalysierten bzw. hochreaktiven Systemen zu erwarten, die eine hohe Reaktionsgeschwindigkeit aufweisen. Dies kann zu einer verminderten Austragsleistung führen oder die Austragsöffnung vollständig zusetzen. Daraus resultieren wiederum Stillstandszeiten und kurze Wartungs- und Reinigungsintervalle.

Es bestand deshalb die Aufgabe, Schaumstabilisatoren bereitzustellen, die die Herstellung und Verarbeitung von Polyurethan- bzw. Polyisocyanurat-Schaumstoffen ermöglichen, ohne einen oder mehrere der aus dem Stand der Technik bekannten Nachteile, wie z.B. das Zusetzen der Austragsöffnungen der Verarbeitungsapparatur, aufzuweisen, und die dabei vorzugsweise die Schaumeigenschaften nicht negativ beeinflussen.

Überraschenderweise wurde nun gefunden, dass Zusammensetzungen, die zwei verschiedene Sorten von Polyethersiloxanen, wie nachfolgend und in den Ansprüchen beschrieben, aufweisen, die vorgenannte Aufgabe lösen.

Gegenstand der vorliegenden Erfindung sind deshalb Zusammensetzungen, die zur Herstellung von Polyurethan- oder Polyisocyanurat-Hartschaumstoffen geeignet sind, enthaltend zumindest eine Isocyanatkomponente, zumindest eine Isocyanat-reaktive Komponente, zumindest einen Schaumstabilisator, zumindest einen Urethan-und/oder Isocyanurat-Katalysator, optional Wasser und/oder Treibmittel, und optional zumindest ein Flammschutzmittel und/oder weitere Additive, welche sich dadurch auszeichnet, dass sie als Schaumstabilisatoren mindestens zwei verschiedene Sorten 1 und 2 von Polyethersiloxanen, wie nachfolgend und in den Ansprüchen definiert, aufweisen.

Ebenfalls Gegenstand der vorliegenden Erfindung ist die Verwendung dieser Zusammensetzungen zur Herstellung von Polyurethan- oder Polyisocyanurat-Schaumstoffen, bevorzugt Hartschaumstoffen.

Außerdem ist Gegenstand der vorliegenden Erfindung die Verwendung von erfindungsgemäßen Hartschaumstoffen als oder zur Herstellung von Dämmplatten, Isolationsmittel und in Form von Metallverbundelementen als Konstruktionselement für den Bau von Gebäuden, Kühlräumen, Kühl-Containern und -Lastkraftwagen sowie eine Kühlapparatur, die als Isoliermaterial einen erfindungsgemäßen Polyurethan- oder Polyisocyanurat-Hartschaumstoff aufweist, sowie die Verwendung als Isolationsund Füllmaterial in Form von Sprühschaum, der direkt auf die zu isolierende oder verfüllende Oberfläche bzw. in entsprechende Kavitäten auf- bzw. eingebracht wird.

Die erfindungsgemäßen Zusammensetzungen enthaltend eine Kombinationen von Polyethersiloxanen ermöglicht eine Verarbeitung, indem sie das Zusetzen der Austragsöffnung von Schaumapplikatoren bzw. Verarbeitungsmaschinen (z.B. Austragsöffnungen von Nieder- und Hochdruckmaschinen, Spritzapparaturen, Sprühapparaturen, Düsen) vermindern und/oder verlangsamen. Der Einsatz der erfindungsgemäßen Zusammensetzungen ermöglicht somit höhere Maschinenlaufzeiten bzw. längere Reinigungsintervalle.

Weiterhin zeigt die erfindungsgemäße Zusammensetzung ein gutes bzw. verbessertes Fließverhalten der zu verschäumenden Reaktionsmasse, wodurch das Einfließen in Hohlräume, Lücken, Unregelmäßigkeiten der zu behandelnden Oberflächen und weitere Kavitäten, sowie das Umfließen von Hindernissen erleichtert wird.

Die erfindungsgemäßen Zusammensetzungen weisen weiterhin der Vorteil auf, dass neben verbessertem Fließverhalten auch andere vorteilhafte Gebrauchseigenschaften von Schäumen erreicht werden, wie z. B. gute Oberflächenqualität, homogene Schaumverteilung und gute Isolationsleistung.

Aus erfindungsgemäßen Zusammensetzungen bzw. unter Verwendung dieser hergestellte Polyurethan- oder Polyisocyanuratschäume, insbesondere Hartschäume haben außerdem den Vorteil, dass sie eine gute Feinzelligkeit und damit gute Isoliereigenschaften aufweisen und gleichzeitig wenig Schaumdefekte aufweisen.

Die vorliegende Erfindung wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Wenn im nachfolgenden Mittelwerte angegeben sind, so handelt es sich, wenn nicht anders angegeben, um das Zahlenmittel. Wenn nicht anders angegeben, sind Messungen bei 20 °C und Normaldruck durchgeführt worden.

Siloxanverbindungen können bequem anhand eines komprimierten Nomenklaturkurzsystems, wie es dem Fachmann als "MDTQ"-Nomenklatur bekannt ist, identifiziert werden. Nach diesem System wird das Siloxan gemäß dem Vorliegen der verschiedenen Siloxanmonomereinheiten, welche das Silicon aufbauen, beschrieben. Die Bedeutungen der einzelnen Abkürzungen im vorliegenden Dokument wird in der vorliegenden Beschreibung näher erläutert.

Die erfindungsgemäßen Zusammensetzungen, die zur Herstellung von Polyurethan- oder Polyisocyanurat-Hartschaumstoffen geeignet sind, enthaltend zumindest eine Isocyanatkomponente, zumindest eine Isocyanat-reaktive Komponente, bevorzugt Polyolkomponente, zumindest einen Schaumstabilisator, zumindest einen Urethan- und/oder Isocyanurat-Katalysator (also einen Katalysator der die Urethan- und/oder die die Isocyanurat-Reaktion katalysiert), optional Wasser und/oder optional Treibmittel, und optional zumindest ein Flammschutzmittel und/oder optional weitere Additive, zeichnen sich dadurch aus, dass die Zusammensetzungen als Schaumstabilisatoren mindestens zwei verschiedene Sorten von Polyethersiloxanen aufweisen, wobei eine Polyethersiloxansorte, nachfolgend Polyethersiloxansorte 1, der Formel (I)

MₐD_{b}D_{'c}D"_{d}TₑQ_{f} (I)

genügt, mit 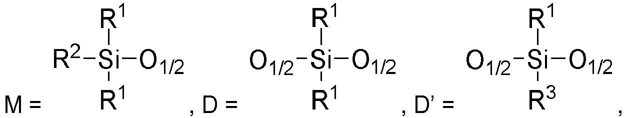 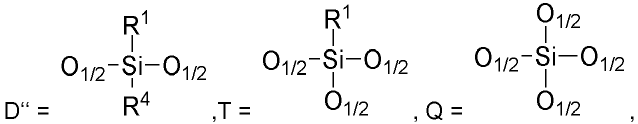
R¹ = unabhängig voneinander gleiche oder verschiedene Kohlenwasserstoffreste mit 1 bis 16 Kohlenstoffatomen, bevorzugt Methyl, Ethyl, Propyl und Phenyl, insbesondere bevorzugt Methyl,
R² = unabhängig voneinander R¹, R³ oder R⁴,
R³ = unabhängig voneinander gleiche oder verschiedene Polyetherreste der allgemeinen Formel (II),

   -R⁵O[CH₂CH₂O]_{g}[CH₂CH(CH₃)O]ₕ[CHR⁶CHR⁷O]ᵢR⁸ (II)
R⁴ = unabhängig voneinander gleiche oder verschiedene Reste der allgemeinen Formel (III*a) oder Formel (IIIb), 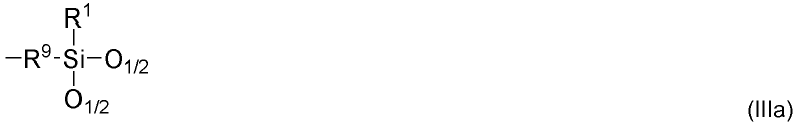 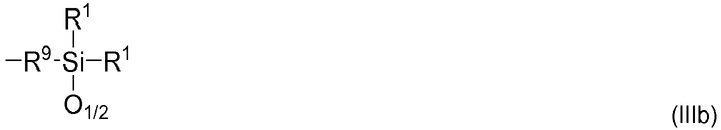
R⁵ = gleiche oder verschiedene divalente Kohlenwasserstoffreste mit 1 bis 16 Kohlenstoffatomen, die ggf. durch Sauerstoffatome unterbrochen sein können, bevorzugt Rest der allgemeinen Formel (IV) 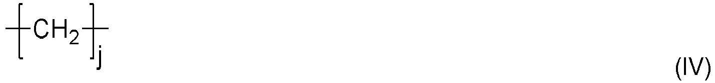
mit j = 1 bis 8, bevorzugt 3,
R⁶ und R⁷ = unabhängig voneinander gleiche oder verschiedene Kohlenwasserstoffreste mit 1 bis 16, bevorzugt 1 bis 12 Kohlenstoffatomen, die ggf. durch Sauerstoffatome unterbrochen sein können, oder H, besonders bevorzugt Methyl, Ethyl, Phenyl oder H,
R⁸ = unabhängig voneinander gleiche oder verschiedene Kohlenwasserstoffreste mit 1 bis 16 Kohlenstoffatomen, die gegebenenfalls durch Urethanfunktionen, -C(O)NH-, Carbonylfunktionen oder -C(O)O- unterbrochen sein können, oder H, bevorzugt Methyl, -C(O)Me oder H,
R⁹ = divalenter (zweibindiger) organischer Rest, bevorzugt mit 2 bis 20 Kohlenstoffatomen, die gegebenenfalls durch eine oder mehrere Sauerstofffunktionen oder Funktionen der Formel -[SiR¹₂-O]ₖ-SiR¹₂- mit k = 1 bis 10 unterbrochen sein können und gegebenenfalls OH-Funktionen besitzen, besonders bevorzugt divalente organische Reste mit 6 bis 16 Kohlenstoffatomen, die gegebenenfalls durch ein oder mehrere Sauerstofffunktionen unterbrochen sein können und gegebenenfalls OH-Funktionen besitzen,
a = 2 bis 32, bevorzugt 2 bis 15, insbesondere bevorzugt 2,
b = 2 bis 247, bevorzugt 3 bis 150, insbesondere bevorzugt 4 bis 80,
c = 0,5 bis 35, bevorzugt 1 bis 22, insbesondere bevorzugt 1,5 bis 12,
d = 0 bis 6, bevorzugt 0 bis 4, insbesondere bevorzugt 0,
e = 0 bis 15, bevorzugt 0 bis 10, insbesondere bevorzugt 0,
f = 0 bis 15, bevorzugt 0 bis 10, insbesondere bevorzugt 0,
mit der Maßgabe N = a + b + c + d + e + f = 5 bis 250, bevorzugt = 5 bis 160, insbesondere bevorzugt = 8 bis 80,
g = 4 bis 25,
h = 0 bis 10,
i = 0,
wobei für die Polyethersiloxane der Polyethersiloxansorte 1 gilt, dass mindestens ein Rest R³ vorhanden ist, dessen Molgewicht zu mindestens 90 Massen-% durch -[CH₂CH₂O]-Einheiten gebildet wird,
und eine Polyethersiloxansorte, nachfolgend Polyethersiloxansorte 2, der Formel (I), wie für Polyethersiloxansorte 1 definiert, genügt, mit der Maßgabe, dass bei Polyethersiloxansorte 2
a = 2 bis 32, bevorzugt 2 bis 15, insbesondere bevorzugt 2,
b = 2 bis 297, bevorzugt 3 bis 190, insbesondere bevorzugt 4 bis 110,
c = 0,3 bis 30, bevorzugt 0,9 bis 20, insbesondere bevorzugt 1,2 bis 10,
d = 0 bis 6, bevorzugt 0 bis 4, insbesondere bevorzugt 0,1 bis 3,
e = 0 bis 15, bevorzugt 0 bis 10, insbesondere bevorzugt 0,
f = 0 bis 15, bevorzugt 0 bis 10, insbesondere bevorzugt 0,
mit der Maßgabe N = a + b + c + d + e + f = 5 bis 300, bevorzugt = 8 bis 200 insbesondere bevorzugt = 10 bis 120,
g = 5 bis 30,
h = 3 bis 20 und
i = 0, und für Polyethersiloxane der Polyethersiloxansorte 2 gilt, dass mindestens ein Rest R³ vorhanden ist, dessen Molgewicht zu maximal 50 Massen-% aus -[CH₂CH₂O]-Einheiten gebildet wird.

Die Polyethersiloxane der Formeln (I) sind (Co-)Polymere, die herstellungsbedingt meist polydisperse Verbindungen sind, so dass die zu ihrer Beschreibung verwendeten Indices als Mittelwerte (Zahlenmittel) verstanden werden müssen.

Erfindungsgemäß sind als Polyethersiloxane der Polyethersiloxansorte 1 solche vorhanden, bei denen in den vorhandenen Resten R³ über 70 mol-% und bevorzugt 100 mol-% der Reste R⁸ H sind.

Als Polyethersiloxane der Polyethersiloxansorte 2 sind in der erfindungsgemäßen Zusammensetzung solche vorhanden, bei denen in den vorhandenen Resten R³ weniger als 30 mol-% und bevorzugt weniger als 10 mol-% der Reste R⁸ H sind.

Erfindungsgemäße Zusammensetzungen sind damit solche, bei denen als Polyethersiloxane der Polyethersiloxansorte 1 solche vorhanden sind, bei denen in den vorhandenen Resten R³ über 70 mol-% und bevorzugt 100 mol-% der Reste R⁸ H sind, und bei denen als Polyethersiloxane der Polyethersiloxansorte 2 solche vorhanden sind, bei denen in den vorhandenen Resten R³ weniger als 30 mol-% und bevorzugt weniger als 10 mol-% der Reste R⁸ H sind.

Die Parameter der Polyethersiloxane können nach dem Fachmann bekannten Verfahren bestimmt werden. Hierzu dient beispielsweise die Kernspinresonanzspektroskopie (NMR-Spektroskopie). Für Details zur Ausführung der Analytik und der Auswertung wird auf die Publikation EP 2465892A1 (¹H-NMR), das Kapitel "Silicones in Industrial Applications" in "Inorganic Polymers" von Nova Science Publisher, 2007 (ISBN: 1-60021-656-0) und "Frank Uhlig, Heinrich Chr. Marsmann: 29Si NMR - Some Practical Aspects" im Katalog "Silicon compounds: Silanes and Silicones" der Firma Gelest, Inc. (²⁹Si-NMR) verwiesen.

Die in der erfindungsgemäßen Zusammensetzung vorhandenen bzw. eingesetzten Polyethersiloxane können prinzipiell nach den aus dem Stand der Technik bekannten Verfahren zur Herstellung von Polyethersiloxanen erhalten werden. Die Synthese der erfindungsgemäßen Polyethersiloxane erfolgt vorzugsweise durch eine Platinkatalysierte Umsetzung von Si-H-funktionellen Siloxanen mit endständig ungesättigten Polyethern; eine detaillierte Beschreibung findet sich in EP 1 520 870. In EP 0 493 836 ist die Herstellung von Polyether-modifizierten Siloxanen dargestellt, die in Weichschäumen Verwendung finden. Weitere Beispiele zur Herstellung von entsprechenden Siloxanen sind beispielsweise in US 4,147,847 und US 4,855,379 beschrieben.

Die in dieser sogenannten Hydrosilylierungsreaktion eingesetzten Vorstufen sind ihrerseits mit Hilfe von etablierten chemischen Verfahren zugänglich: Die Si-H-funktionellen Siloxane können durch Umsetzung von SiH-Funktion-freien Siloxanen, vorzugsweise z.B. Hexamethyldisiloxan und Decamethylcyclopentasiloxan, mit Si-H-funktionellen Siloxanen, vorzugsweise linearen Polymethylhydrogensiloxanen, wie beispielsweise HMS-993 der Firma Gelest Inc., und optional linearen α,ω-Dihydrogenpolydimethylsiloxanen, wie beispielsweise 1,1,3,3-Tetramethyldisiloxan, in einer Säure-katalysierten Äquilibrierungsreaktion erhalten werden. Die mittlere Struktur des Produktes wird dabei über das Verhältnis der eingesetzten Rohstoffe bestimmt.

Die endständig ungesättigten Polyether können durch Umsetzung von endständig ungesättigten Startalkoholen, wie vorzugsweise Allylalkohol, mit verschiedensten Alkylenoxiden erhalten werden, vorzugsweise unter alkalischer Katalyse mit beispielsweise Alkalihydroxiden oder Doppelmetallcyanid-Katalyse (DMC-Katalyse). Die Sequenz der erhaltenen Polyether wird dabei über die Dosierung der Alkylenoxide gesteuert. Block-Strukturen können dadurch erhalten werden, dass zunächst Alkylenoxid A an den Startalkohol angelagert wird und nach Erreichen eines vollständigen Umsatzes das Alkylenoxid B zudosiert und angelagert wird. Statistische Sequenzen können dadurch erhalten werden, dass die Alkylenoxide A und B im Gemisch eingesetzt werden. Sind die gewünschte Sequenz und Molmasse aufgebaut, können die Polyether gegebenenfalls entweder direkt einer wässrigen Aufarbeitung unterzogen werden, wobei Produkte mit endständiger OH-Funktion erhalten werden, oder optional einem weiteren Reaktionsschritt zur Endverkappung unterzogen werden, beispielsweise durch Umsetzung mit Methylchlorid unter Bildung einer Methylether-Endgruppe nach Williamson. So ist zum Beispiel in EP 1 360 223 und den darin zitierten Dokumenten die Herstellung von olefinischen Polyethern mit und ohne Derivatisierung der OH-Funktionalität beschrieben.

Es können verschiedenste Alkylenoxide zur Herstellung der Polyether-Reste verwendet werden, bevorzugt sind Ethylenoxid, Propylenoxid, optional Butylenoxid und optional Styroloxid. Die Sequenz der verschiedenen Alkylenoxid-Bausteine kann beliebig gewählt werden, d.h. sie kann entweder durch statistischen Einbau erhalten werden, oder durch einen gezielten Blockaufbau erhalten werden. Insbesondere bei OH-funktionellen Polyether-Resten kann es vorteilhaft sein, wenn ein Di-Block-Aufbau erzielt wird, wobei zunächst ein reiner Ethylenoxid-Block erzeugt wird und anschließend der abschließende Endblock, in dem abschließend ein Alkylenoxid ungleich Ethylenoxid eingesetzt wird.

Der Massenanteil an Polyethersiloxanen der Polyethersiloxansorten 1 und 2 (also der Massenanteil der Summe der Polythersiloxane der beiden Polyethersiloxansorten) beträgt in der erfindungsgemäßen Zusammensetzung bezogen auf 100 Massenteile Isocyanat-reaktiver Komponente, bevorzugt Polyolkomponente, (pphp) vorzugsweise von 0,05 bis 10 pphp, bevorzugt 0,1 bis 5 pphp und besonders bevorzugt 0,1 bis 3 pphp.

Grundsätzlich beträgt das Massenverhältnis von Polyethersiloxanen der Polyethersiloxansorte 1 zu Polyethersiloxanen der Polyethersiloxansorte 2 in der erfindungsgemäßen Zusammensetzung von 0,1 zu 1 bis 1 zu 0,1, bevorzugt von 0,2 zu 1 bis 1 zu 0,2 und besonders bevorzugt 0,5 zu 1 bis 1 zu 0,5.

Es kann vorteilhaft sein, wenn die erfindungsgemäße Zusammensetzung mehr als 50 Gew.-%, bevorzugt mehr als 90 Gew.-% jeweils bezogen auf die Gesamtsumme der in der Zusammensetzung enthaltenen Polyethersiloxane an Polyethersiloxanen aufweist, die der Formel (I), wie für die Polyethersiloxansorten 1 und 2 definiert, genügen. Besonders vorteilhaft sind in der erfindungsgemäßen Zusammensetzung ausschließlich solche Polyethersiloxane enthalten, die von den Definitionen der Polyethersiloxansorten 1 oder 2 umfasst werden.

Als Isocyanatkomponente kann die erfindungsgemäße Zusammensetzung alle zur Herstellung von Polyurethan- oder Polyisocyanurat-Hartschaumstoffen geeigneten Isocyanatverbindungen aufweisen. Vorzugsweise weist die erfindungsgemäße Zusammensetzung ein oder mehrere organische Isocyanate mit zwei oder mehr Isocyanat-Funktionen auf, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Als Isocyanat-reaktive Komponente, können alle organischen Substanzen mit mehreren gegenüber Isocyanaten reaktiven Gruppen, sowie deren Zubereitungen eignesetzt werden. Bevorzugt wird als Isocyanat-reaktive Komponente eine Polyolkomponente eingesetzt. Bevorzugte Polyole sind alle zur Herstellung von Polyurethan-Schaumstoffen üblicherweise verwendeten Polyole, wie z. B. Polyetherpolyole und Polyesterpolyole. Polyetherpolyole können durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (wir z. B. Glycolen).

Ein geeignetes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 80 bis 350.

Als Urethan- und/oder Isocyanurat-Katalysatoren weist die erfindungsgemäße Zusammensetzung vorzugsweise ein oder mehrere Katalysatoren für die Reaktionen Isocyanat-Polyol und/oder Isocyanat-Wasser und/oder die Di- bzw. Trimerisierung des Isocyanates auf. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat oder Zinn-II-2-ethylhexanoat, Bismuthverbindungen wie Bismuth-2-ethylhexanoat, Zinkverbindungen und Kaliumsalze wie Kaliumacetat, und Kalium-2-ethylhexanoat.

Bevorzugte in der erfindungsgemäßen Zusammensetzung vorhandene Mengen an Katalysatoren richten sich nach dem Typ des Katalysators und liegen üblicherweise im Bereich von 0,05 bis 15 pphp (= Massenteile bezogen auf 100 Massenteile Polyol).

Geeignete Wasser-Gehalte im Sinne dieser Erfindung hängen davon ab, ob zusätzlich zum Wasser noch ein oder mehrere Treibmittel eingesetzt werden oder nicht. Bei rein Wasser-getriebenen Schäumen liegen die Werte vorzugsweise bei 1 bis 20 pphp, werden zusätzlich andere Treibmittel eingesetzt, verringert sich die Einsatzmenge auf vorzugsweise 0 bis 5 pphp.

Sind in der erfindungsgemäßen Zusammensetzung zusätzliche Treibmittel vorhanden, können diese physikalische oder chemische Treibmittel sein. Vorzugsweise weist die Zusammensetzung physikalische Treibmittel auf. Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, vollständig oder teilweise halogenierte ungesättigte Kohlenwasserstoffe, Sauerstoff-haltige Verbindungen wie Methylformiat und Dimethoxymethan, oder Chlorkohlenwasserstoffe, bevorzugt 1,2-Dichlorethan.

Neben oder an Stelle von Wasser und gegebenenfalls physikalischen Treibmitteln können auch andere chemische Treibmittel eingesetzt werden, die mit Isocyanaten unter Gasentwicklung reagieren, wie beispielsweise Ameisensäure, die üblicherweise in Mengen bis 5 pphp in Kombination mit Wasser oder anstelle von Wasser eingesetzt wird.

Als Flammschutzmittel kann die erfindungsgemäße Zusammensetzung alle bekannten und zur Herstellung von Polyurethan- oder Polyisocyanurat-Hartschaumstoffen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

Die erfindungsgemäßen Zusammensetzungen sind z. B. durch Kombination von zwei oder mehr getrennt vorliegenden Komponenten erhältlich, wobei eine der Komponenten die Isocyanat-reaktive Komponente ist und eine andere Komponente die Isocyanatkomponente ist, wobei die Isocyanat-reaktive Komponente als Mischung, enthaltend alle Polyethersiloxane der Polyethersiloxansorte 1, eingesetzt wird.

Vorzugsweise wird die Isocyanat-reaktive Komponente als Mischung, enthaltend alle Polyethersiloxane der Polyethersiloxansorten 1 und 2, eingesetzt.

In einer anderen Ausführungsform kann es vorteilhaft sein, wenn die Isocyanat-reaktive Komponente als Mischung, enthaltend alle Polyethersiloxane der Polyethersiloxansorte 1, eingesetzt wird und die Isocyanatkomponente ebenfalls als Mischung, enthaltend alle Polyethersiloxane der Polyethersiloxansorte 2, eingesetzt wird.

Die erfindungsgemäßen Zusammensetzungen können zur Herstellung von Polyurethan- oder Polyisocyanurat-Schaumstoffen, vorzugsweise Hartschaumstoffen verwendet werden. Insbesondere können die erfindungsgemäßen Zusammensetzungen zur Herstellung von Polyurethan- oder Polyisocyanurat-Schaumstoffformen verwendet werden, die Kavitäten und/oder Hinterschneidungen aufweisen. Die erfindungsgemäßen Zusammensetzungen werden besonders bevorzugt verwendet bei solchen Herstellverfahren, bei denen eine Sprühschaumapparatur oder ein Mischkopf eingesetzt wird.

Das erfindungsgemäße Verfahren zur Herstellung von Polyurethan- oder Polyisocyanurat-Hartschaumstoffen, zeichnet sich dadurch aus, dass eine wie oben beschriebene, erfindungsgemäße Zusammensetzung umgesetzt wird. Eine zusammenfassende Darstellung des Stands der Technik, der verwendeten Rohstoffe und anwendbaren Verfahren findet sich in Houben-Weyl: "Methoden der organischen Chemie", Band E20, Thieme Verlag, Stuttgart 1987,(3), Seite 1561 bis 1757, und in "Ullmann's Encyclopedia of Industrial Chemistry" Vol. A21, VCH, Weinheim, 4. Auflage 1992, S. 665 bis 715. Mit der erfindungsgemäßen Zusammensetzung bzw. mit dem erfindungsgemäßen Verfahren können Polyurethan- bzw. Polyisocyanuratschaumstoffe, insbesondere -hartschschaumstoffe hergestellt werden.

Eine bevorzugte Zusammensetzung, insbesondere eine Polyurethan- bzw. Polyisocyanurat-Hartschaumformulierung im Sinne dieser Erfindung würde Polyurethan- bzw. Polyisocyanurat-Hartschäume mit einem Raumgewicht von 5 bis 200 kg/m³, bevorzugt von 5 bis 80 kg/m³ ergeben und hätte die folgende prinzipielle Zusammensetzung:

**Tabelle 1: Typische Hartschaumformulierung**

| **Komponente** | **Gewichtsanteil** |
|---|---|
| Polyol | 100 |
| Katalysator(en) | 0,05 bis 15 |
| Kombination von hydrophilen Polyethersiloxanen der Formel (I) und hydrophoben Polyethersiloxanen der Formel (I) | 0,1 bis 5 |
| Wasser | 0 bis 20 |
| Treibmittel | 0 bis 40 |
| Flammschutzmittel | 0 bis 50 |
| | |
| Isocyanat-Index: 80 bis 350 | |

Da die erfindungsgemäße Zusammensetzung, von wenigen Ausnahmen abgesehen, vor ihrer Umsetzung in zwei Komponenten aufgeteilt ist, müssen zu deren Umsetzung die Komponenten miteinander vermischt werden. Dies kann nach allen dem Fachmann geläufigen Verfahren erfolgen, beispielsweise im Handmischverfahren oder bevorzugt mit Hilfe von Nieder- bzw. Hochdruck-Verschäumungsmaschinen oder durch Sprüh- bzw. Spritzpistolen. Dabei können diskontinuierliche Verfahren, beispielsweise zur Produktion von Formschäumen und Paneelen, oder bevorzugt kontinuierliche Verfahren, beispielsweise bei Dämmplatten und Metallverbundelementen (im sogenannten Doppelband-Verfahren), bei Blöcken oder bei Sprühverfahren zum Einsatz kommen.

Durch die Verwendung (Umsetzung) der erfindungsgemäßen Zusammensetzungen sind erfindungsgemäße Polyurethan- oder Polyisocyanuratschaumstoffe, bevorzugt Hartschaumstoffe, erhältlich. Vorzugsweise enthalten die erfindungsgemäßen Polyurethan- oder Polyisocyanurat-Hartschaumstoffe 0,05 bis 10 Massenteile, bevorzugt 0,1 bis 5 Massenteile und besonders bevorzugt von 0,1 bis 3 Massenteile bezogen auf 100 Massenteile Polyolkomponente an Polyethersiloxanen der Polyethersiloxansorten 1 und 2 in gebundener und/oder ungebundener Form.

Die erfindungsgemäßen Hartschaumstoffe können z. B. als oder zur Herstellung von Dämmplatten, Isolationsmitteln, Füllmaterial, Metallverbundelementen, Konstruktionselement, bevorzugt für den Bau von Gebäuden, Kühlräumen, Kühl-Containern und -Lastkraftwagen oder Kühlapparaturen verwendet werden. Bevorzugt liegt der Hartschaumstoff in Form von Sprühschaum vor, der direkt auf die zu isolierende oder verfüllende Oberfläche bzw. in entsprechende Kavitäten auf- bzw. eingebracht wird. Auf diese Weise sind Kühlapparaturen, wie z. B. Kühl- oder Gefrierschränke, und isolierte Bauteile zugänglich, die sich dadurch auszeichnen, dass sie als Isoliermaterial einen erfindungsgemäßen Polyurethan- oder Polyisocyanurat-Hartschaumstoff aufweisen.

Nachfolgend werden einige besonders bevorzugte Anwendungen beschrieben, ohne dass der Gegenstand der Erfindung auf diese beschränkt sein soll.

In einer bevorzugten Ausführungsform der vorliegenden Erfindung werden die erfindungsgemäßen Zusammensetzungen in Form von Sprühschaum (Ortschaum, Spritzschaum) zur Isolierung von Fassaden, Wänden, Dächern und anderen Konstruktionen eingesetzt. Dabei wird der Polyurethan- oder Polyisocyanurat-Schaum unmittelbar am Einsatzort erzeugt. Die schäumende Mischung wird in der Regel durch Sprühen, vorzugsweise mit einer Hochdruckmaschine, appliziert, wobei die Komponenten unter Druck und vorzugsweise bei erhöhter Temperatur vor ihrem Austrag aus der Sprühpistole in deren Mischkopf vermischt und so zur Reaktion gebracht werden. Die erfindungsgemäße Zusammensetzung entsteht also durch Mischen der Komponenten im Mischkopf bzw. der Misch- oder Sprühdüse. Die Reaktionsmasse (erfindungsgemäße Zusammensetzung) wird vorzugsweise ohne zusätzliche Luftzufuhr versprüht. Die Maschinen können transportabel sein und mit Förderschläuchen ausgerüstet sein, die eine ausreichende Mobilität sicherstellen. Die Maschine und die Schläuche vorzugsweise mit einer Temperaturhaltevorrichtung ausgerüstet bzw. ummantelt. Die Sprühpistole mit dem integrierten Mischkopf erlaubt beliebiges Unterbrechen des Sprühvorgangs. Das auf die zu isolierende Oberfläche auftreffende Reaktionsgemisch schäumt durch eine entsprechend eingestellte Reaktionszeit sehr schnell auf, sodass sich mit kurzer Verzögerung eine isolierende Schaumschicht bildet. Durch die schnelle Reaktion läuft das Gemisch auch von senkrechten Flächen oder Flächen über Kopf nicht herab.

Durch das Sprühverfahren können sich Isolationsschichten mit wenigen Zentimetern Dicke erzeugen. Bei Bedarf, um zum Beispiel größere Kavitäten auszuschäumen, Lücken zu verfüllen oder dickere Isolationsschichten zu erhalten, kann können die erhaltenen Schichten ein- oder mehrmals überschichtet werden.

Die Anwendung der erfindungsgemäßen Zusammensetzungen bzw. die erfindungsgemäßen Kombinationen von Polyethersiloxanen erleichtert die Applikation des Sprühschaums, indem sie das Zusetzen der Sprühpistole bzw. von deren Öffnung verringert oder verlangsamt und so längeres bzw. häufigeres Sprühen ermöglicht, bevor die Austrittsöffnung gereinigt werden muss. Zudem wird das Fließen der schäumenden Masse in Lücken und Hohlräume verbessert.

In einer weiteren bevorzugten Ausführungsform werden die erfindungsgemäßen Zusammensetzungen bzw. die erfindungsgemäßen Kombinationen von Polyethersiloxanen bei der kontinuierlichen Herstellung von Polyurethan- oder Polyisocyanurat-basierenden Metall-Paneelen verwendet. Hierbei wird in einem Doppelbandlaminator bei Bandgeschwindigkeiten von maximal 25 m/min über einen traversierenden Mischkopf die schäumende Mischung auf die untere Metallschicht aufgetragen. Vorzugsweise sind die Metalldeckschichten hierbei profiliert. Im Laminator erreicht dann die aufsteigende Mischung die obere Deckschicht wodurch ein kontinuierlich gebildetes Metallpaneel entsteht, welches am Austrittsende des Laminators in die gewünschte Länge geschnitten wird.

Hierbei muss die schäumende Mischung die oftmals profilierten Deckschichten komplett bedecken und den Raum zwischen den Deckschichten komplett ausfüllen. In den meisten Fällen wird hier die schäumende Mischung aus einem Mischkopf dosiert an dem sich eine sogenannte Gießharfe befinden kann. Mit einer Gießharfe wird die Mischung aus mehreren Öffnungen entlang der Bandrichtung ausgetragen. Um eine gleichmäßige Schaumverteilung über die Breite des Paneels zu erhalten, wird der Mischkopf traversierend über die Breite des Panels bewegt. Die erfindungsgemäßen Zusammensetzungen haben dabei den Vorteil, dass sie ein verbessertes Verfließens der flüssigen Reaktionsmischung auf der unteren Metallschicht zeigen bzw. gewährleisten.

In einer weiteren bevorzugten Ausführungsform werden die erfindungsgemäßen Zusammensetzungen bzw. die erfindungsgemäßen Kombinationen von Polyethersiloxanen bei der kontinuierlichen Herstellung von Polyurethan- oder Polyisocyanurat-basierenden Paneelen mit flexiblen Deckschichten verwendet. Hierbei wird vorzugsweise in einem Doppelbandlaminator bei Bandgeschwindigkeiten von bis zu 80 m/min über einen oder mehrere Mischköpfe die zu verschäumende Reaktionsmischung auf die untere Deckschicht aufgetragen. Im Laminator erreicht dann die aufsteigende Mischung die obere Deckschicht wodurch ein kontinuierlich gebildetes Paneel entsteht, welches am Austrittsende des Laminators in die gewünschte Länge geschnitten wird. Angesichts der hohen möglichen Bandgeschwindigkeiten muss eine große Menge der aufzuschäumenden Reaktionsmasse pro Zeiteinheit aus den Mischköpfen ausgetragen werden. Gleichzeitig kann es nötig sein, dass die Reaktionszeiten der Reaktionsmasse sehr gering ausgeführt werden, um ein schnelles Aufschäumen zu ermöglichen, die Systeme also stark katalysiert bzw. sehr reaktiv sind. Dabei zeigen die erfindungsgemäßen Zusammensetzungen bzw. Kombinationen von Polyethersiloxanen Vorteile, da ein Zusetzen der Austragsöffnungen der Mischköpfe verringert und/oder verzögert wird. Dies kann zu längeren Wartungs- und Reinigungsintervallen und weniger Stillstandzeiten und/oder höheren Bandgeschwindigkeiten führen.

Es können hierbei ein Vielzahl an verschiedenen Deckschichten eingesetzt werden, wie beispielsweise Papier, Aluminium, Bitumen, Kunststoff, Faserfließe, Mehrschichtfolien aus diversen Materialien, etc.

Hierbei muss die schäumende Mischung aufgrund der höheren Bandgeschwindigkeiten in kurzer Zeit möglichst gleichmäßig verfließen, damit ein homogener Schaum ohne Verdichtungen und unregelmäßige Zellgrößenverteilung entstehen kann. Aufgrund der hohen Austragsmengen, die hier benötigt werden, können hierbei auch Anlagen verwendet werden mit mehr als einem Mischkopf, wobei dann die schäumende Mischung in mehreren Strängen auf den Laminator ausgetragen wird. Dieser Prozess wird auch als "finger lay down" bezeichnet. Generell zeigen hier die erfindungsgemäßen Zusammensetzungen Vorteile beim Verfließen, da die Reaktionsmasse schneller und gleichmäßiger verfließt als bei der Verwendung von Polyethersiloxanen nach dem bisherigen Stand der Technik.

Die vorliegende Erfindung wird an Hand der Abbildungen Fig. 1 bis 3 näher erläutert ohne darauf beschränkt zu sein. Fig. 1 zeigt eine Aufsicht des in den Beispielen beschriebenen Modells einer Kavität. Fig. 2 zeigt eine Ansicht der Längsseite des in den Beispielen beschriebenen Modells einer Kavität. Fig. 3 zeigt eine Ansicht der Querseite ohne die hintere und vordere Wand des in den Beispielen beschriebenen Modells einer Kavität.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

In den im Folgenden beschriebenen Beispielen werden die in Tabelle 2 angegebenen (Sprühschaum-)Formulierungen verwendet, um einen Schaum mit einer Dichte von 32 kg/m³ herzustellen:

**Tabelle 2: In den Beispielen verwendete Formulierungen**

| | **Komponente** | **Gewichtsteile** |
|---|---|---|
| Polyolkomponente | Terol 305 Polyol (Huntsman) | 50 Teile |
| | Carpol MX 425 Polyol (Carpenter) | 20 Teile |
| | TCPP | 15 Teile |
| | Dimethylaminoethanol | 3 Teile |
| | Bis-(2-dimethylaminoethyl)ether | 1 Teil |
| | HFC-245fa | 7 Teile |
| | Wasser | 2 Teile |
| Isocyanatkomponente | MDI Rubinate M (Huntsman) | 100 Teile |

Zur Applizierung des Sprühschaums wird eine Sprühschaumapparatur des Typs "Graco Reactor E-20" und eine Sprühpistole "Graco Fusion AP" mit einer 01-Düse eingesetzt. Die Verarbeitungstemperatur beträgt 43 °C Der Verarbeitungsdruck der beiden Komponenten beträgt ca. 83 bar, was zu einem dynamischen Druck von ca. 69 bar während des Sprühvorgangs führt.

Die Verminderung der Verstopfung der Austragsdüse der Sprühschaumapparatur bei der Applikation von Sprühschaum wird mit folgender Methode gemessen:
Die Sprühpistole wird jeweils zwei Sekunden lang betätigt, gefolgt von einer zwei Sekunden dauernden Pause. Dabei wird eine Holzplatte aus einem durch eine Führungsvorrichtung konstant gehaltenen Abstand von 40 cm so besprüht, dass mit einem Sprühdurchgang eine Schaumbahn mit einer Breite von 18 cm und einer Dicke von 5 cm erhalten wird. Dies wird solange fortgesetzt, bis ein Anzeichen einer beginnenden Verstopfung zu erkennen ist, wobei als Anzeichen eine Verringerung Breite des Sprühaustrags (Sprühbreite) auf 15 cm gewertet wird.

Zunächst werden Vergleichsproben untersucht, indem die Anzahl an Sprüh- und Pausenfolgen ermittelt wird, bevor eine Verstopfung erkennbar wird. Die Vergleichsproben enthalten jeweils einen einzelnen und somit nicht erfindungsgemäßen Schaumstabilisator. Anschließend wird die Anzahl an Sprüh-Pause-Sequenzen auf die gleiche Weise mit erfindungsgemäßen Kombinationen von Schaumstabilisatoren ermittelt.

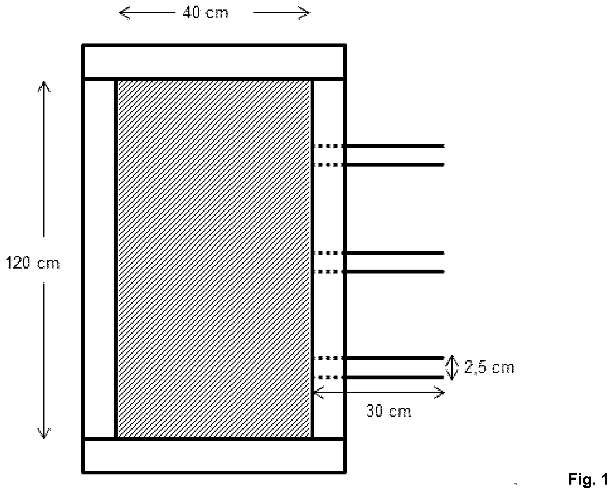

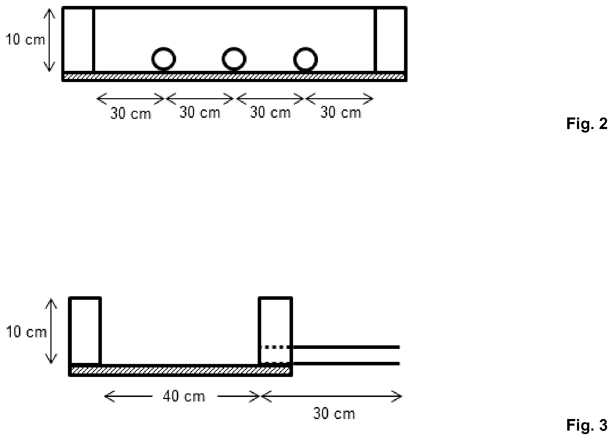

Die Fließfähigkeit der schäumenden Mischung wird mit folgender Methode gemessen: Aus einer OSB-Platte als Boden und Brettern als Seitenwänden wird ein Modell einer Kavität konstruiert. Die Kavität hat die Innenmaße 40 cm (Breite) x 120 cm (Länge) x 10 cm (Höhe). An einer Längsseite werden in regelmäßigem Abstand von der Wand und zueinander drei Löcher gebohrt, in die drei durchsichtige Kunststoffrohre passend eingefügt werden. Die Kunststoffrohre haben einen Innendurchmesser von 2,5 cm und eine Länge von 30 cm, der Abstand zu den Seitenwänden und zueinander beträgt jeweils 30 cm. Die Löcher bzw. Rohre werden bündig mit dem Boden der Kavität angebracht. Diese Rohre sollten Fugen innerhalb des auszufüllenden Hohlraums darstellen, in die der Sprühschaum hineinfließen soll. Die Menge des in die Rohre fließenden Sprühschaumes wird gemessen, indem die Länge der gefüllten Rohre gemessen wird und erlaubt Rückschlüsse auf die Fließfähigkeit des Schaums. Die Figuren Fig. 1 bis 3 verdeutlichen den Aufbau des Modells.

Zur Einbringung des Sprühschaums wird wiederum eine Sprühschaumapparatur "Graco Reactor E-20" und eine Sprühpistole "Graco Fusion AP" mit einer 01-Auslassdüse eingesetzt. Der Schaum wird in einem einzelnen Durchgang in einer Dicke von 5 cm so in die Kavität gesprüht, dass diese von ihrer Bodenfläche her ausgefüllt ist. Die in die Röhren eingedrungene Schaummenge wird bestimmt, indem die Länge des gefüllten Rohres gemessen wird. Dies erfolgt durch Messen ab dem Ansatzpunkt der Rohre an der Außenwand der Konstruktion. Aus den Füllungen in den drei Rohren wird die durchschnittliche Länge der Füllung der drei Rohre ermittelt.

Als Vergleichsproben werden Schäume mit einem einzelnen, somit nicht erfindungsgemäßen Schaumstabilisator in den Hohlraum geschäumt und die Länge der Füllung der Kunststoffrohre gemessen. Anschließend werden die zu beurteilenden erfindungsgemäße Kombinationen von Polyethersiloxanen eingesetzt und in gleicher Weise die Veränderung die Fließfähigkeit des Schaums bestimmt. Aus der beobachteten Veränderung der Länge des gefüllten Stückes des Kunststoffrohres kann die prozentuale Fließverbesserung relativ zum Basissystem berechnet werden.

Die in den Beispielen verwendeten erfindungsgemäßen Polyethersiloxane werden folgendermaßen hergestellt:
Die einzusetzenden Si-H-funktionellen Siloxan werden wie in Beispiel 1 der Schrift EP 1439200 aus den entsprechenden Siloxan-Rohstoffen durch Äquilibrierung hergestellt (Für die Herstellung von Siloxanen mit endständiger Modifizierung muss entsprechend ein Polymethylwasserstoffsiloxan mit endständigem Wasserstoff-Funktionalität als Rohstoff verwendet werden.). Die Art und Menge der Rohstoffe wird so gewählt, dass die jeweils gewünschte Siloxanstruktur erhalten wird.

Die Herstellung der Allyl-Polyether erfolgt analog zu der in Beispiel 1 der Schrift DE 19940797 beschriebenen Methode, wobei hier Allylalkohol als Starter und entsprechend Ethylenoxid und Propylenoxid verwendet werden.

Die eingesetzten Allyl-gestarteten Polyether werden nach Bedarf nach dem in DE 102005001076 beschriebenen Verfahren durch Umsetzung mit Methylchlorid verethert (Endverkappung).

Die Hydrosilylierungsreaktionen (Umsetzungen der Si-H-funktionellen Siloxane mit den Allylpolyethern) werden entsprechend dem Beispiel 1 in der Schrift EP 1 520 870 durchgeführt und dabei wird nach Bedarf Divinyltetramethyldisiloxan oder 1,7-Octadien in den entsprechenden Mengen zugegeben.

### Beispiel 1: Verminderung der Verstopfung der Austragsdüse einer Sprühschaumapparatur (Referenzbeispiel ohne Rest R³, dessen Molgewicht zu maximal 50 Massen-% aus -[CH₂CH₂O]-Einheiten gebildet wird)

Folgende Polyethersiloxane werden eingesetzt:
Polyethersiloxan A: hydrophil mit der Struktur M₂D₁₁D'₃
   mit R² = R¹ = CH₃; R³ = -(CH₂)₃-O-[CH₂CH₂O]₁₂H
Polyethersiloxan B: hydrophob mit der Struktur M₂D₇₀D'_{7,5}D"_{0,5}
   mit R² = R¹ = CH₃; R³ = -(CH₂)₃-O-[CH₂CH₂O]₁₉[CH₂CH(CH₃)O]₁₀Me; R⁹ = -CH₂-CH₂-[Si(CH₃)₂O]₁-Si(CH₃)₂CH₂-CH₂-

In einer ersten Versuchsreihe des Beispiels 1 befindet sich das hydrophobe Polyethersiloxan B der Polyethersiloxankombination in der als Isocyanat-reaktive Komponente eingesetzten Polyolkomponente, das hydrophile Polyethersiloxan A ebenso in der Polyolkomponente. Die Ergebnisse sind in Tabelle 2 zusammengefasst.

**Tabelle 2**

| **Bsp.** | **Gewichts anteil A in Polyol- Komponente** | **Gewichtsanteil B in Polyol- Komponente** | **Anzahl Sprühvorgänge bis Verstopfungszeichen** | |
|---|---|---|---|---|
| 1.1 | 1,0 Teile | 0 Teile | 10 | Nicht erfindungsgemäß (Standard) |
| 1.2 | 0 Teile | 1,0 Teile | Schaumstörungen | Nicht erfindungsgemäß |
| 1.3 | 1,0 Teile | 0,5 Teile | 23 | Erfindungsgemäß |
| 1.4 | 1,0 Teile | 1,0 Teile | 24 | Erfindungsgemäß |
| 1.5 | 1,5 Teile | 0 Teile | 8 | Nicht erfindungsgemäß |

Das Vergleichsbeispiel Beispiel 1.1 mit 1,0 Gewichtsteilen des hydrophilen Polyethersiloxans A in der Polyolkomponente ist der Standard und ermöglicht 10 Sprühvorgänge, bevor eine zunehmende Verstopfung der Austragsdüse auftritt. Eine Menge von 1,0 Gewichtsteilen des hydrophoben Polyethersiloxans B in der Polyolkomponente (Beispiel 1.2) ist nicht in der Lage, den Sprühschaum ausreichend zu stabilisieren, was zu Schaumstörungen führt. Eine Kombination aus 1,0 Gewichtsteilen A und 0,5 (Bsp. 1.3) bzw. 1,0 (Bsp. 1.4) Gewichtsteilen B in der Polyolkomponente erhöht die Anzahl der Sprühvorgänge vor dem Eintreten von Verstopfungszeichen jedoch deutlich. Eine alleinige Erhöhung der Menge an A auf 1,5 Gewichtsteile (Beispiel 1.5) erbringt hingegen nicht das gewünschte Ergebnis.

In einer zweiten Versuchsreihe des Beispiels 1 befindet sich das hydrophobe Polyethersiloxan B der Polyethersiloxankombination in der Isocyanat-Komponente und das hydrophile Polyethersiloxan A in der Polyolkomponente. Die Ergebnisse sind in Tabelle 3 zusammengefasst. Das hydrophile Polyethersiloxan ist auf Grund von gegenüber Isocyanat reaktiven Gruppen nicht geeignet, in der Isocyanatkomponente enthalten zu sein.

**Tabelle 3**

| **Bsp.** | **Gewichtsanteil A in Polyol- Komponente** | **Gewichtsanteil B in Isocyanat- Komponente** | **Anzahl Sprühvorgänge bis Verstopfungszeichen** | |
|---|---|---|---|---|
| 1.6 | 1,0 Teile | 0,5 Teile | 29 | erfindungsgemäß |
| 1.7 | 1,0 Teile | 1,0 Teile | 31 | erfindungsgemäß |

Der alleinige Einsatz von 1,0 Gewichtsteilen A in der Polyolkomponente (Bsp. 1.1) ergibt wie schon angegeben 10 Sprühvorgänge ohne Verstopfungszeichen. Werden zusätzlich 0,5 (Bsp. 1.6) oder 1,0 (Bsp. 1.7) Gewichtsteile B in der Isocyanatkomponente eingesetzt, ergibt sich eine deutliche Erhöhung der Anzahl an Sprühvorgängen, bis eine Verstopfung auftritt.

### Beispiel 2: Verminderung der Verstopfung der Austragsdüse einer Sprühschaumapparatur

Folgende Polyethersiloxane werden eingesetzt:
Polyethersiloxan C: hydrophil mit der Struktur M₂D₃₀D'₈
   mit R² = R¹ = CH₃; zu 80 mol-% ist R³ = -(CH₂)₃-O-[CH₂CH₂O]₁₂H, zu 20 mol-% ist R³ = -(CH₂)₃-O-[CH₂CH₂O]₁₃[CH₂CH(CH₃)O]₃H
Polyethersiloxan D: hydrophob mit der Struktur M₂D_{32,5}D'₅D"_{0,5}
   mit R² = R¹ = CH₃; zu 90 mol-% ist R³ = -(CH₂)₃-O-[CH₂CH₂O]₈[CH₂CH(CH₃)O]₁₆C(O)CH₃, zu 10 mol-% ist R³ = -(CH₂)₃-O-[CH₂CH₂O]₂₄[CH₂CH(CH₃)O]₄C(O)CH₃; R⁹ = -(CH₂)₈-

In einer ersten Versuchsreihe des Beispiels 2 befinden sich sowohl das hydrophobe Polyethersiloxan D als auch das hydrophile Polyethersiloxan C der Polyethersiloxankombination in der Polyolkomponente. Die Ergebnisse sind in Tabelle 4 zusammengefasst.

**Tabelle 4**

| **Bsp.** | **Gewichtsanteil C in Polyol- Komponente** | **Gewichtsanteil D in Polyol- Komponente** | **Anzahl Sprühvorgänge bis Verstopfungszeichen** | |
|---|---|---|---|---|
| 2.1 | 1,0 Teile | 0 Teile | 12 | Nicht erfindungsgemäß (Standard) |
| 2.2 | 0 Teile | 1,0 Teile | Schaumstörungen | Nicht erfindungsgemäß |
| 2.3 | 1,0 Teile | 0,5 Teile | 19 | Erfindungsgemäß |
| 2.4 | 1,0 Teile | 1,0 Teile | 20 | Erfindungsgemäß |
| 2.5 | 1,5 Teile | 0 Teile | 11 | Nicht erfindungsgemäß |

Bsp. 2.1 mit 1,0 Gewichtsteilen des hydrophilen Polyethersiloxans C in der Polyolkomponente ist das Vergleichsbeispiel und ermöglicht 12 Sprühvorgänge, bevor eine zunehmende Verstopfung der Austragsdüse auftritt. Eine Menge von 1,0 Gewichtsteilen des hydrophoben Polyethersiloxans D in der Polyolkomponente (Bsp. 2.2) ist nicht in der Lage, den Sprühschaum ausreichend zu stabilisieren, was zu Schaumstörungen führt. Eine Kombination aus 1,0 Gewichtsteilen C und 0,5 (Bsp. 2.3) bzw. 1,0 (Bsp. 2.4) Gewichtsteilen D in der Polyolkomponente erhöht die Anzahl der Sprühvorgänge vor dem Eintreten von Verstopfungszeichen jedoch deutlich. Eine alleinige Erhöhung der Menge an C auf 1,5 Gewichtsteile (Bsp. 2.5) erbringt hingegen nicht das gewünschte Ergebnis.

In einer zweiten Versuchsreihe des Beispiels 2 befindet sich das hydrophobe Polyethersiloxan D der Polyethersiloxankombination in der Isocyanat-Komponente und das hydrophile Polyethersiloxan C in der Polyolkomponente. Die Ergebnisse sind in Tabelle 5 zusammengefasst. Das hydrophile Polyethersiloxan ist auf Grund von gegenüber Isocyanat reaktiven Gruppen nicht geeignet, in der Isocyanatkomponente enthalten zu sein.

**Tabelle 5**

| **Bsp.** | **Gewichtsanteil C in Polyol- Komponente** | **Gewichtsanteil D in Isocyanat- Komponente** | **Anzahl Sprühvorgänge bis Verstopfungszeichen** | |
|---|---|---|---|---|
| 2.6 | 1,0 Teile | 0,5 Teile | 26 | Erfindungsgemäß |
| 2.7 | 1,0 Teile | 1,0 Teile | 24 | Erfindungsgemäß |

Der alleinige Einsatz von 1,0 Gewichtsteilen C in der Polyolkomponente (Bsp. 2.1) ergibt wie schon angegeben 12 Sprühvorgänge ohne Verstopfungszeichen. Werden zusätzlich 0,5 (Bsp. 2.6) oder 1,0 (Bsp. 2.7) Gewichtsteile D in der Isocyanatkomponente eingesetzt, ergibt sich eine deutliche Erhöhung der Anzahl an Sprühvorgängen, bis eine Verstopfung auftritt.

### Beispiel 3: Verbesserung des Fließens der schäumenden Mischung (Referenzbeispiel ohne Rest R³, dessen Molgewicht zu maximal 50 Massen-% aus - [CH₂CH₂O]-Einheiten gebildet wird)

Folgende Polyethersiloxane werden eingesetzt:
Polyethersiloxan A: (Polyethersiloxansorte 1) mit der Struktur M₂D₁₁D'₃
   mit R² = R¹ = CH₃; R³=-(CH₂)₃-O-[CH₂CH₂O]₁₂H
Polyethersiloxan B: (Polyethersiloxansorte 2) mit der Struktur M₂D₇₀D'_{7,5}D"_{0,5}
   mit R² = R¹ = CH₃; R³ = -(CH₂)₃-O-[CH₂CH₂O]₁₉[CH₂CH(CH₃)O]₁₀Me; R⁹ = -CH₂-CH₂-[Si(CH₃)₂O]₁-Si(CH₃)₂CH₂-CH₂-

In einer ersten Versuchsreihe des Beispiels 3 befinden sich das Polyethersiloxan B und das Polyethersiloxan A der Polyethersiloxankombination in der Polyolkomponente. Die Ergebnisse sind in Tabelle 6 zusammengefasst.

**Tabelle 6**

| **Bsp.** | **Gewichtsan teil A in Polyol- Komponente** | **Gewichtsan teil B in Polyol- Komponente** | **Mittlerer Schaum fluss** | **Fließverbesserung im Vergl. zum Standard (Exp. 3.1)** | |
|---|---|---|---|---|---|
| 3.1 | 1,0 Teile | 0 Teile | 6,0 cm | - | Nicht erfindungsgemäß (Standard) |
| 3.2 | 0 Teile | 1,0 Teile | Schaumstörungen | - | Nicht erfindungsgemäß |
| 3.3 | 1,0 Teile | 0,5 Teile | 13,5 cm | 125 % | Erfindungsgemäß |
| 3.4 | 1,0 Teile | 1,0 Teile | 15,1 cm | 152 % | Erfindungsgemäß |
| 3.5 | 1,5 Teile | 0 Teile | 6,2 cm | 3% | Nicht erfindungsgemäß |

Bsp. 3.1 mit 1,0 Gewichtsteilen des Polyethersiloxans A in der Polyolkomponente ist das Vergleichsbeispiel und ergibt eine durchschnittliche Fülllänge der Rohre von 6,0 cm. Eine Menge von 1,0 Gewichtsteilen des Polyethersiloxans B in der Polyolkomponente (Bsp. 3.2) ist nicht in der Lage, den Sprühschaum ausreichend zu stabilisieren, was zu Schaumstörungen führt. Eine Kombination aus 1,0 Gewichtsteilen A und 0,5 (Bsp. 3.3) bzw. 1,0 (Bsp. 3.4) Gewichtsteilen B in der Polyolkomponente ergibt eine deutliche Erhöhung des Fließens. Eine alleinige Erhöhung der Menge an A auf 1,5 Gewichtsteile (Bsp. 3.5) erbringt hingegen nicht das gewünschte Ergebnis.

In einer zweiten Versuchsreihe des Beispiels 3 befindet sich das Polyethersiloxan B der Polyethersiloxankombination in der Isocyanat-Komponente und das Polyethersiloxan A in der Polyolkomponente. Die Ergebnisse sind in Tabelle 7 zusammengefasst. Das Polyethersiloxan A ist auf Grund von gegenüber Isocyanat reaktiven Gruppen nicht geeignet, in der Isocyanatkomponente enthalten zu sein.

**Tabelle 7**

| **Bsp.** | **Gewichtsan teil A in Polyol- Komponente** | **Gewichtsan teil B in Isocyanat- Komponente** | **Mittlerer Schaum fluss** | **Fließverbesserung im Vergl. zum Standard (Exp. 3.1)** | |
|---|---|---|---|---|---|
| 3.6 | 1,0 Teile | 0,5 Teile | 8,3 | 38 % | Erfindungsgemäß |
| 3.7 | 1,0 Teile | 1,0 Teile | 8,5 | 42 % | Erfindungsgemäß |

Der alleinige Einsatz von 1,0 Gewichtsteilen A in der Polyolkomponente (Bsp. 3.1) ergibt wie schon angegeben eine durchschnittliche Fülllänge der Rohre von 6,0 cm. Werden zusätzlich 0,5 (Bsp. 3.6) oder 1,0 (Bsp. 3.7) Gewichtsteile B in der Isocyanatkomponente eingesetzt, ergibt sich eine deutliche Erhöhung des Fließens.

### Beispiel 4: Verbesserung des Fließens der schäumenden Mischung

Folgende Polyethersiloxane werden eingesetzt:
Polyethersiloxan C: Polyethersiloxansorte 1 mit der Struktur M₂D₃₀D'₈
   mit R² = R¹ = CH₃; zu 80 mol-% ist R³ = -(CH₂)₃-O-[CH₂CH₂O]₁₂H, zu 20 mol-% ist R³ = -(CH₂)₃-O-[CH₂CH₂O]₁₃[CH₂CH(CH₃)O]₃H
Polyethersiloxan D: Polyethersiloxansorte 2 mit der Struktur M₂D_{32,5}D'₅D"_{0,5}
   mit R² = R¹ = CH₃; zu 90 mol-% ist R³ = -(CH₂)₃-O-[CH₂CH₂O]₈[CH₂CH(CH₃)O]₁₆C(O)CH₃, zu 10 mol-% ist R³ = -(CH₂)₃-O-[CH₂CH₂O]₂₄[CH₂CH(CH₃)O]₄C(O)CH₃; R⁹ = -(CH₂)₈-

In einer ersten Versuchsreihe des Beispiels 4 befinden sich das Polyethersiloxan D und das Polyethersiloxan C der Polyethersiloxankombination in der Polyolkomponente. Die Ergebnisse sind in Tabelle 8 zusammengefasst.

**Tabelle 8**

| **Bsp.** | **Gewichtsan teil C in Polyol- Komponente** | **Gewichtsan teil D in Polyol- Komponente** | **Mittlerer Schaum fluss** | **Fließverbesserung in % im Vergl. zum Standard (Exp. 4.1)** | |
|---|---|---|---|---|---|
| 4.1 | 1,0 Teile | 0 Teile | 5,4 cm | - | Nicht erfindungsgemäß (Standard) |
| 4.2 | 0 Teile | 1,0 Teile | Schaumstörungen | - | Nicht erfindungsgemäß |
| 4.3 | 1,0 Teile | 0,5 Teile | 11,1 | 106 % | Erfindungsgemäß |
| 4.4 | 1,0 Teile | 1,0 Teile | 12,0 | 122 % | Erfindungsgemäß |
| 4.5 | 1,5 Teile | 0 Teile | 5,9 | 9% | Nicht erfindungsgemäß |

Bsp. 4.1 mit 1,0 Gewichtsteilen des Polyethersiloxans C in der Polyolkomponente ist das Vergleichsbeispiel und ergibt eine durchschnittliche Fülllänge der Rohre von 5,4 cm. Eine Menge von 1,0 Gewichtsteilen des Polyethersiloxans D in der Polyolkomponente (Bsp. 4.2) ist nicht in der Lage, den Sprühschaum ausreichend zu stabilisieren, was zu Schaumstörungen führte. Eine Kombination aus 1,0 Gewichtsteilen C und 0,5 (Bsp. 4.3) bzw. 1,0 (Bsp. 4.4) Gewichtsteilen D in der Polyolkomponente ergibt eine deutliche Erhöhung des Fließens. Eine alleinige Erhöhung der Menge an C auf 1,5 Gewichtsteile (Bsp. 4.5) erbringt hingegen nicht das gewünschte Ergebnis.

In einer zweiten Versuchsreihe des Beispiels 4 befindet sich das Polyethersiloxan D der Polyethersiloxankombination in der Isocyanat-Komponente und das Polyethersiloxan C in der Polyolkomponente. Die Ergebnisse sind in Tabelle 9 zusammengefasst. Das Polyethersiloxan C ist auf Grund von gegenüber Isocyanat reaktiven Gruppen nicht geeignet, in der Isocyanatkomponente enthalten zu sein.

**Tabelle 9**

| **Bsp.** | **Gewichtsan teil C in Polyol- Komponente** | **Gewichtsan teil D in Isocyanat- Komponente** | **Mittlerer Schaum fluss** | **Fließverbesserung in % im Vergl. zum Standard (Exp. 4.1)** | |
|---|---|---|---|---|---|
| 4.1 | 1,0 Teile | 0 Teile | 5,4 cm | - | Nicht erfindungsgemäß (Standard) |
| 4.6 | 1,0 Teile | 0,5 Teile | 7,5 | 39 % | Erfindungsgemäß |
| 4.7 | 1,0 Teile | 1,0 Teile | 7,8 | 44 % | Erfindungsgemäß |

Der alleinige Einsatz von 1,0 Gewichtsteilen C in der Polyolkomponente (Bsp. 4.1) ergibt, wie schon angegeben, eine durchschnittliche Fülllänge der Rohre von 5,4 cm. Werden zusätzlich 0,5 (Bsp. 4.6) oder 1,0 (Bsp. 4.7) Gewichtsteile D in der Isocyanatkomponente eingesetzt, ergibt sich eine deutliche Erhöhung des Fließens.

## Patentansprüche

1. Zusammensetzung, die zur Herstellung von Polyurethan- oder Polyisocyanurat-Hartschaumstoffen geeignet ist, enthaltend zumindest eine Isocyanatkomponente, zumindest eine Isocyanat-reaktive Komponente, zumindest einen Schaumstabilisator, zumindest einen Urethan- und/oder Isocyanurat-Katalysator, optional Wasser und/oder Treibmittel, und optional zumindest ein Flammschutzmittel und/oder weitere Additive, **dadurch gekennzeichnet, dass** die Zusammensetzung als Schaumstabilisatoren mindestens zwei verschiedene Sorten von Polyethersiloxanen aufweist, wobei eine Polyethersiloxansorte, nachfolgend Polyethersiloxansorte 1, der Formel (I)
Mₐ D_{b} D'_{c} D"_{d} Tₑ Q_{f} (I)
genügt, mit 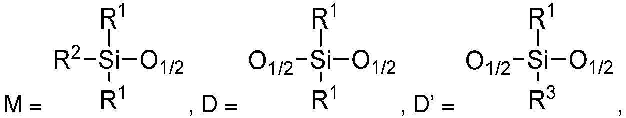 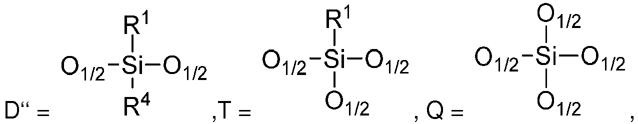
R¹ = unabhängig voneinander gleiche oder verschiedene Kohlenwasserstoffreste mit 1 bis 16 Kohlenstoffatomen, bevorzugt Methyl, Ethyl, Propyl und Phenyl, insbesondere bevorzugt Methyl,
R² = unabhängig voneinander R¹, R³ oder R⁴,
R³ = unabhängig voneinander gleiche oder verschiedene Polyetherreste der allgemeinen Formel (II),
-R⁵O[CH₂CH₂O]_{g}[CH₂CH(CH₃)O]ₕ[CHR⁶CHR⁷O]ᵢR⁸ (II)
R⁴ = unabhängig voneinander gleiche oder verschiedene Reste der allgemeinen Formel (IIIa) oder Formel (IIIb), 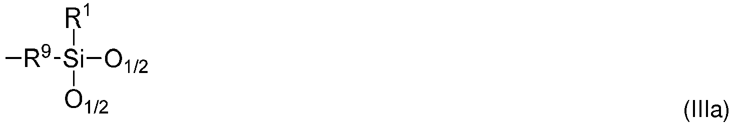 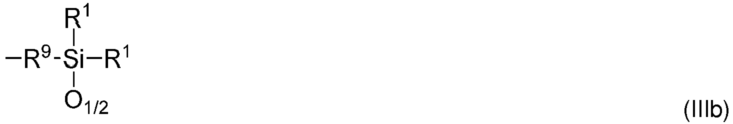
R⁵ = gleiche oder verschiedene divalente Kohlenwasserstoffreste mit 1 bis 16 Kohlenstoffatomen, die ggf. durch Sauerstoffatome unterbrochen sein können, bevorzugt Rest der allgemeinen Formel (IV) 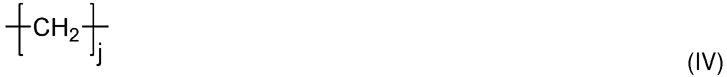
mit j = 1 bis 8, bevorzugt 3,
R⁶ und R⁷ = unabhängig voneinander gleiche oder verschiedene Kohlenwasserstoffreste mit 1 bis 16, bevorzugt 1 bis 12 Kohlenstoffatomen, die ggf. durch Sauerstoffatome unterbrochen sein können, oder H, besonders bevorzugt Methyl, Ethyl, Phenyl oder H,
R⁸ = unabhängig voneinander gleiche oder verschiedene Kohlenwasserstoffreste mit 1 bis 16 Kohlenstoffatomen, die gegebenenfalls durch Urethanfunktionen, -C(O)NH-,-Carbonylfunktionen oder -C(O)O- unterbrochen sein können, oder H, bevorzugt Methyl, -C(O)Me oder H,
R⁹ = divalenter organischer Rest, bevorzugt mit 2 bis 20 Kohlenstoffatomen, die gegebenenfalls durch eine oder mehrere Sauerstofffunktionen oder Funktionen der Formel -[SiR¹₂-O]ₖ-SiR¹₂- mit k = 1 bis 10 unterbrochen sein können und gegebenenfalls OH-Funktionen besitzen, besonders bevorzugt divalente organische Reste mit 6 bis 16 Kohlenstoffatomen, die gegebenenfalls durch ein oder mehrere Sauerstofffunktionen unterbrochen sein können und gegebenenfalls OH-Funktionen besitzen,
a = 2 bis 32, bevorzugt 2 bis 15, insbesondere bevorzugt 2,
b = 2 bis 247, bevorzugt 3 bis 150, insbesondere bevorzugt 4 bis 80,
c = 0,5 bis 35, bevorzugt 1 bis 22, insbesondere bevorzugt 1,5 bis 12,
d = 0 bis 6, bevorzugt 0 bis 4, insbesondere bevorzugt 0,
e = 0 bis 15, bevorzugt 0 bis 10, insbesondere bevorzugt 0,
f = 0 bis 15, bevorzugt 0 bis 10, insbesondere bevorzugt 0,
mit der Maßgabe N = a + b + c + d + e + f = 5 bis 250, bevorzugt = 5 bis 160, insbesondere bevorzugt = 8 bis 80,
g = 4 bis 25,
h = 0 bis 10,
i = 0,
wobei für die Polyethersiloxane der Polyethersiloxansorte 1 gilt, dass mindestens ein Rest R³ vorhanden ist, dessen Molgewicht zu mindestens 90 Massen-% durch -[CH₂CH₂O]-Einheiten gebildet wird,
und eine Polyethersiloxansorte, nachfolgend Polyethersiloxansorte 2, der Formel (I), wie für Polyethersiloxansorte 1 definiert, genügt, mit der Maßgabe, dass bei Polyethersiloxansorte 2
a = 2 bis 32, bevorzugt 2 bis 15, insbesondere bevorzugt 2,
b = 2 bis 297, bevorzugt 3 bis 190, insbesondere bevorzugt 4 bis 110,
c = 0,3 bis 30, bevorzugt 0,9 bis 20, insbesondere bevorzugt 1,2 bis 10,
d = 0 bis 6, bevorzugt 0 bis 4, insbesondere bevorzugt 0,1 bis 3,
e = 0 bis 15, bevorzugt 0 bis 10, insbesondere bevorzugt 0,
f = 0 bis 15, bevorzugt 0 bis 10, insbesondere bevorzugt 0,
mit der Maßgabe N = a + b + c + d + e + f = 5 bis 300, bevorzugt = 8 bis 200 insbesondere bevorzugt = 10 bis 120,
g = 5 bis 30,
h = 3 bis 20 und
i = 0,
und für Polyethersiloxane der Polyethersiloxansorte 2 gilt, dass mindestens ein Rest R³ vorhanden ist, dessen Molgewicht zu maximal 50 Massen-% aus -[CH₂CH₂O]-Einheiten gebildet wird,
wobei als Polyethersiloxane der Polyethersiloxansorte 1 solche vorhanden sind, bei denen in den vorhandenen Resten R³ über 70 mol-% der Reste R⁸ H sind,
und wobei
als Polyethersiloxane der Polyethersiloxansorte 2 solche vorhanden sind, bei denen in den vorhandenen Resten R³ weniger als 30 mol-% der Reste R⁸ H sind,
und wobei das Massenverhältnis von Polyethersiloxanen der Polyethersiloxansorte 1 zu Polyethersiloxanen der Polyethersiloxansorte 2 in der Zusammensetzung von 0,1 zu 1 bis 1 zu 0,1 beträgt.

2. Zusammensetzung nach Anspruch 1, **dadurch gekennzeichnet, dass** als Polyethersiloxane der Polyethersiloxansorte 1 solche vorhanden sind, bei denen in den vorhandenen Resten R³ 100 mol-% der Reste R⁸ H sind.

3. Zusammensetzung nach Anspruch 1 oder 2, **dadurch gekennzeichnet, dass** als Polyethersiloxane der Polyethersiloxansorte 2 solche vorhanden sind, bei denen in den vorhandenen Resten R³ weniger als 10 mol-% der Reste R⁸ H sind.

4. Zusammensetzung nach einem der vorangegangenen Ansprüche, **dadurch gekennzeichnet, dass** der Massenanteil an Polyethersiloxanen der Polyethersiloxansorten 1 und 2 in der Zusammensetzung bezogen auf 100 Massenteile Isocyanat-reaktiver Komponente, bevorzugt Polyolkomponente, (pphp) von 0,05 bis 10 pphp, bevorzugt 0,1 bis 5 pphp und besonders bevorzugt 0,1 bis 3 pphp beträgt.

5. Zusammensetzung nach einem der vorangegangenen Ansprüche, **dadurch gekennzeichnet, dass** das Massenverhältnis von Polyethersiloxanen der Polyethersiloxansorte 1 zu Polyethersiloxanen der Polyethersiloxansorte 2 in der Zusammensetzung von 0,2 zu 1 bis 1 zu 0,2 beträgt.

6. Zusammensetzung nach einem der vorangegangenen Ansprüche, **dadurch gekennzeichnet, dass** ausschließlich solche Polyethersiloxane in der Zusammensetzung enthalten sind, die von den Definitionen der Polyethersiloxansorten 1 oder 2 umfasst werden.

7. Zusammensetzung nach einem der vorangegangenen Ansprüche, erhältlich durch Kombination von zwei oder mehr getrennt vorliegenden Komponenten, wobei eine der Komponenten die Isocyanat-reaktive Komponente ist und eine andere die Isocyanatkomponente ist, wobei die Isocyanat-reaktive Komponente als Mischung, enthaltend alle Polyethersiloxane der Polyethersiloxansorte 1, eingesetzt wird.

8. Zusammensetzung nach Anspruch 7, **dadurch gekennzeichnet, dass** die Isocyanat-reaktive Komponente als Mischung, enthaltend alle Polyethersiloxane der Polyethersiloxansorten 1 und 2, eingesetzt wird.

9. Zusammensetzung nach Anspruch 7, **dadurch gekennzeichnet, dass** die Isocyanatkomponente als Mischung, enthaltend alle Polyethersiloxane der Polyethersiloxansorte 2, eingesetzt wird.

10. Verwendung von Zusammensetzungen gemäß einem der vorangegangenen Ansprüche zur Herstellung von Polyurethan- oder Polyisocyanurat-Schaumstoffen, bevorzugt Hartschaumstoffen.

11. Verwendung gemäß Anspruch 10, **dadurch gekennzeichnet, dass** Polyurethan- oder Polyisocyanurat-Schaumstoffformen hergestellt werden, die Kavitäten und/oder Hinterschneidungen aufweisen.

12. Verwendung nach Anspruch 10 oder 11, **dadurch gekennzeichnet, dass** bei der Herstellung eine Sprühschaumapparatur oder ein Mischkopf eingesetzt wird.

13. Polyurethan- oder Polyisocyanurat-Hartschaumstoff, erhältlich durch Umsetzung einer Zusammensetzung gemäß einem der Ansprüche 1 bis 7.

14. Verwendung eines Hartschaumstoffs gemäß Anspruch 13 als oder zur Herstellung von Dämmplatten, Isolationsmitteln, Füllmaterial, Metallverbundelementen, Konstruktionselementen, bevorzugt für den Bau von Gebäuden, Kühlräumen, Kühl-Containern und -Lastkraftwagen oder Kühlapparaturen.

15. Verwendung gemäß Anspruch 14, **dadurch gekennzeichnet, dass** der Hartschaumstoff in Form von Sprühschaum vorliegt, der direkt auf die zu isolierende oder verfüllende Oberfläche bzw. in entsprechende Kavitäten auf- bzw. eingebracht wird.

## Claims

1. Composition suitable for production of rigid polyurethane or polyisocyanurate foams, comprising at least one isocyanate component, at least one isocyanate-reactive component, at least one foam stabilizer, at least one urethane and/or isocyanurate catalyst, optionally water and/or blowing agent, and optionally at least one flame retardant and/or further additives, **characterized in that** the composition comprises at least two different varieties of polyether siloxanes as foam stabilizers, wherein one polyether siloxane variety, hereinafter polyether siloxane variety 1, conforms to formula (I)
Mₐ D_{b} D'_{c} D"_{d} Tₑ Q_{f} (I)
where 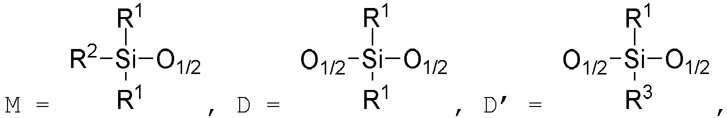 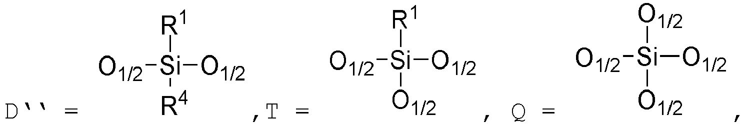
R¹ = independently alike or different hydrocarbon moieties of 1 to 16 carbon atoms, preferably methyl, ethyl, propyl and phenyl, more preferably methyl,
R² = independently R¹, R³ or R⁴,
R³ = independently alike or different polyether moieties, preferably polyether moieties of the general formula (II),
-R⁵O[CH₂CH₂O]_{g}[CH₂CH(CH₃)O]ₕ[CHR⁶CHR⁷O]ᵢR⁸ (II)
R⁴ = independently alike or different moieties of the general formula (IIIA) or (IIIb) 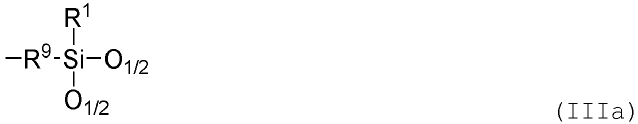 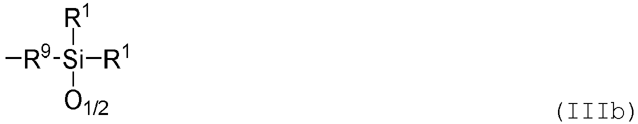
R⁵ = alike or different divalent hydrocarbon moieties of 1 to 16 carbon atoms, which may optionally be interrupted by oxygen atoms, preferably a moiety of the general formula (IV) 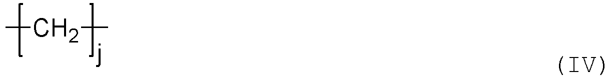
where j = 1 to 8, preferably 3,
R⁶ and R⁷ = independently alike or different hydrocarbon moieties of 1 to 16, preferably 1 to 12 carbon atoms, which may optionally be interrupted by oxygen atoms, or H, more preferably methyl, ethyl, phenyl or H,
R⁸ = independently alike or different hydrocarbon moieties of 1 to 16 carbon atoms, which may optionally be interrupted by urethane functions, -C(O)NH-, carbonyl functions or -C(O)O-, or H, preferably methyl, -C(O)Me or H,
R⁹ = a divalent organic moiety, preferably of 2 to 20 carbon atoms, which may optionally be interrupted by one or more oxygen functions or functions of the formula - [SiR¹₂-O]ₖ-SiR¹₂- where k = 1 to 10, and optionally possess OH functions, more preferably divalent organic moieties of 6 to 16 carbon atoms which may optionally be interrupted by one or more oxygen functions and optionally possess OH functions,
a = 2 to 32, preferably 2 to 15, more preferably 2,
b = 2 to 247, preferably 3 to 150, more preferably 4 to 80,
c = 0.5 to 35, preferably 1 to 22, more preferably 1.5 to 12,
d = 0 to 6, preferably 0 to 4, more preferably 0,
e = 0 to 15, preferably 0 to 10, more preferably 0,
f = 0 to 15, preferably 0 to 10, more preferably 0, with the proviso N = a + b + c + d + e + f = 5 to 250, preferably = 5 to 160, more preferably = 8 to 80,
g = 4 to 25,
h = 0 to 10,
i = 0,
wherein the polyether siloxanes of polyether siloxane variety 1 are subject to the condition that there is at least one R³ moiety whose molar weight comprises at least 90% by mass of -[CH₂CH₂O]- units, and one polyether siloxane variety, hereinafter polyether siloxane variety 2, conforms to formula (I) as defined for polyether siloxane variety 1, with the proviso that in the case of polyether siloxane variety 2
a = 2 to 32, preferably 2 to 15, more preferably 2,
b = 2 to 297, preferably 3 to 190, more preferably 4 to 110,
c = 0.3 to 30, preferably 0.9 to 20, more preferably 1.2 to 10,
d = 0 to 6, preferably 0 to 4, more preferably 0.1 to 3,
e = 0 to 15, preferably 0 to 10, more preferably 0,
f = 0 to 15, preferably 0 to 10, more preferably 0, with the proviso N = a + b + c + d + e + f = 5 to 300, preferably = 8 to 200, more preferably = 10 to 120,
g = 5 to 30,
h = 3 to 20, and
i = 0,
and polyether siloxanes of polyether siloxane variety 2 are subject to the condition that there is at least one R³ moiety whose molar weight comprises at most 50% by mass of -[CH₂CH₂O]- units,
wherein the polyether siloxanes present as polyether siloxanes of polyether siloxane variety 1 are those where above 70 mol% of the R⁸ moieties in the R³ moieties present are H, and wherein
the polyether siloxanes present as polyether siloxanes of polyether siloxane variety 2 are those less than 30 mol% of the R8 moieties in the R3 moieties present are H, and wherein
the mass ratio of polyether siloxanes of polyether siloxane variety 1 to polyether siloxanes of polyether siloxane variety 2 in the composition is in the range from 0.1:1 to 1:0.1.

2. Composition according to Claim 1, **characterized in that** the polyether siloxanes present as polyether siloxanes of polyether siloxane variety 1 are those where 100 mol% of the R⁸ moieties in the R³ moieties present are H.

3. Composition according to Claim 1 or 2, **characterized in that** the polyether siloxanes present as polyether siloxanes of polyether siloxane variety 2 are those where less than 10 mol% of the R⁸ moieties in the R³ moieties present are H.

4. Composition according to any preceding claim, **characterized in that** the mass fraction of polyether siloxanes of polyether siloxane varieties 1 and 2 in the composition, based on 100 parts by mass isocyanate-reactive components, preferably of polyol component (pphp), is in the range from 0.05 to 10 pphp, preferably in the range from 0.1 to 5 pphp and more preferably in the range from 0.1 to 3 pphp.

5. Composition according to any preceding claim, **characterized in that** the mass ratio of polyether siloxanes of polyether siloxane variety 1 to polyether siloxanes of polyether siloxane variety 2 in the composition is in the range from 0.2:1 to 1:0.2.

6. Composition according to any preceding claim, **characterized in that** the composition contains exclusively polyether siloxanes that are encompassed by the definitions of polyether siloxane varieties 1 or 2.

7. Composition according to any preceding claim, obtainable by combining two or more separate components, where one of the components is the isocyanate-reactive component and one other component is the isocyanate component, in which case the isocyanate-reactive component is used as a mixture comprising all polyether siloxanes of polyether siloxane variety 1.

8. Composition according to Claim 7, **characterized in that** the isocyanate-reactive component is used as a mixture comprising all polyether siloxanes of polyether siloxane varieties 1 and 2.

9. Composition according to Claim 7, **characterized in that** the isocyanate component is used as a mixture comprising all polyether siloxanes of polyether siloxane variety 2.

10. Use of compositions according to any preceding claim for production of foamed polyurethane or polyisocyanurate materials, preferably rigid foams.

11. Use according to Claim 10, **characterized in that** moulded polyurethane or polyisocyanurate foams having cavities and/or undercuts are produced.

12. Use according to Claim 10 or 11, **characterized in that** a spray foam apparatus or a mix head is used in the production.

13. Rigid polyurethane or polyisocyanurate foam, obtainable by reacting a composition according to any of Claims 1 to 7.

14. Use of a rigid foam according to Claim 13 as or for production of insulation slabs, insulating media, filling material, metal composite elements, engineering elements, preferably for the construction of buildings, cold stores, refrigeration containers and trucks or refrigeration apparatus.

15. Use according to Claim 14, **characterized in that** the rigid foam is in the form of spray foam which is applied directly atop the surface to be insulated or filled and/or into corresponding cavities.

## Revendications

1. Composition, qui est appropriée pour la fabrication de mousses dures de polyuréthane ou de polyisocyanurate, contenant au moins un composant isocyanate, au moins un composant réactif avec les isocyanates, au moins un stabilisateur de mousse, au moins un catalyseur d'uréthane et/ou d'isocyanurate, éventuellement de l'eau et/ou un agent gonflant, et éventuellement au moins un agent ignifuge et/ou d'autres additifs, **caractérisée en ce que** la composition comprend en tant que stabilisateurs de mousse au moins deux types différents de polyéther-siloxanes,
un type de polyéther-siloxane, ci-après type de polyéther-siloxane 1, satisfaisant la formule (I)
MₐD_{b}D'_{c}D"_{d}TₑQ_{f} (I)
avec 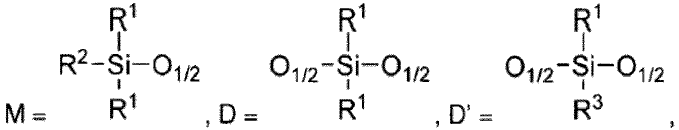 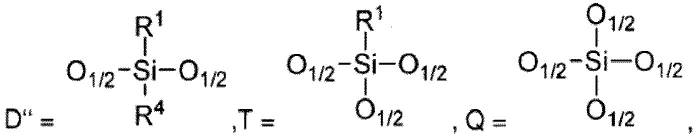
les R¹ = indépendamment les uns des autres, des radicaux hydrocarbonés identiques ou différents de 1 à 16 atomes de carbone, de préférence méthyle, éthyle, propyle et phényle, de manière particulièrement préférée méthyle, les R² = indépendamment les uns des autres R¹, R³ ou R⁴, les R³ = indépendamment les uns des autres, des radicaux polyéther identiques ou différents de formule générale (II)
-R⁵O[CH₂CH₂O]_{g}[CH₂CH(CH₃)O]ₕ[CHR⁶CHR⁷O]ᵢR⁸ (II)
les R⁴ = indépendamment les uns des autres, des radicaux identiques ou différents de formule générale (IIIa) ou de formule (IIIb) 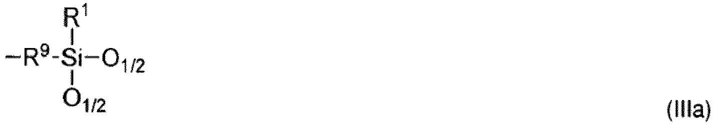 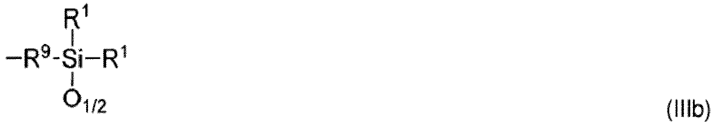
R⁵ = des radicaux hydrocarbonés bivalents identiques ou différents de 1 à 16 atomes de carbone, qui peuvent éventuellement être interrompus par des atomes d'oxygène, de préférence un radical de formule générale (IV) 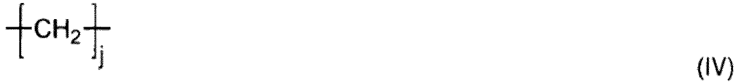
avec j = 1 à 8, de préférence 3,
R⁶ et R⁷ = indépendamment les uns des autres, des radicaux hydrocarbonés identiques ou différents de 1 à 16, de préférence 1 à 12 atomes de carbone, qui peuvent éventuellement être interrompus par des atomes d'oxygène, ou H, de manière particulièrement préférée méthyle, éthyle, phényle ou H,
les R⁸ = indépendamment les uns des autres, des radicaux hydrocarbonés identiques ou différents de 1 à 16 atomes de carbone qui peuvent éventuellement être interrompus par des fonctions uréthane, -C(O)NH-, des fonctions carbonyle ou -C(O)O-, ou H, de préférence méthyle, - C(O)ME ou H,
R⁹ = un radical organique bivalent, de préférence de 2 à 20 atomes de carbone, qui peut éventuellement être interrompu par une ou plusieurs fonctions oxygène ou fonctions de formule -[SiR¹₂-O]ₖ-SiR¹₂- avec k = 1 à 10, et comprend éventuellement des fonctions OH, de manière particulièrement préférée des radicaux organiques bivalents de 6 à 16 atomes de carbone, qui peuvent éventuellement être interrompus par une ou plusieurs fonctions oxygène et comprennent éventuellement des fonctions OH,
a = 2 à 32, de préférence 2 à 15, de manière particulièrement préférée 2,
b = 2 à 247, de préférence 3 à 150, de manière particulièrement préférée 4 à 80,
c = 0,5 à 35, de préférence 1 à 22, de manière particulièrement préférée 1,5 à 12,
d = 0 à 6, de préférence 0 à 4, de manière particulièrement préférée 0,
e = 0 à 15, de préférence 0 à 10, de manière particulièrement préférée 0,
f = 0 à 15, de préférence 0 à 10, de manière particulièrement préférée 0,
à condition que N = a + b + c + d + e + f = 5 à 250, de préférence 5 à 160, de manière particulièrement préférée 8 à 80,
g = 4 à 25,
h = 0 à 10,
i = 0,
pour les polyéther-siloxanes du type de polyéther-siloxane 1, au moins un radical R³ dont le poids moléculaire est formé à hauteur d'au moins 90 % en masse par des unités -[CH₂CH₂O]- étant présent,
et un type de polyéther-siloxane, ci-après type de polyéther-siloxane 2, satisfaisant la formule (I), telle que définie pour le type de polyéther-siloxane 1, à condition que pour le type de polyéther-siloxane 2,
a = 2 à 32, de préférence 2 à 15, de manière particulièrement préférée 2,
b = 2 à 297, de préférence 3 à 190, de manière particulièrement préférée 4 à 110,
c = 0,3 à 30, de préférence 0,9 à 20, de manière particulièrement préférée 1,2 à 10,
d = 0 à 6, de préférence 0 à 4, de manière particulièrement préférée 0,1 à 3,
e = 0 à 15, de préférence 0 à 10, de manière particulièrement préférée 0,
f = 0 à 15, de préférence 0 à 10, de manière particulièrement préférée 0,
à condition que N = a + b + c + d + e + f = 5 à 300, de préférence 8 à 200, de manière particulièrement préférée 10 à 120,
g = 5 à 30,
h = 3 à 20,
i = 0,
pour les polyéther-siloxanes du type de polyéther-siloxane 2, au moins un radical R³ dont le poids moléculaire est formé à hauteur d'au plus 50 % en masse par des unités -[CH₂CH₂O]- étant présent,
des polyéther-siloxanes dans lesquels plus de 70 % en moles des radicaux R⁸ représentent H dans les radicaux R³ présents étant présents en tant que polyéther-siloxanes de type de polyéther-siloxane 1, et
des polyéther-siloxanes dans lesquels moins de 30 % en moles des radicaux R⁸ représentent H dans les radicaux R³ présents étant présents en tant que polyéther-siloxanes de type de polyéther-siloxane 2,
et le rapport en masse entre les polyéther-siloxanes de type de polyéther-siloxane 1 et les polyéther-siloxanes de type de polyéther-siloxane 2 dans la composition étant de 0,1 sur 1 à 1 sur 0,1.

2. Composition selon la revendication 1, **caractérisée en ce que** des polyéther-siloxanes dans lesquels 100 % en moles des radicaux R⁸ représentent H dans les radicaux R³ présents sont présents en tant que polyéther-siloxanes de type de polyéther-siloxane 1.

3. Composition selon la revendication 1 ou 2, **caractérisée en ce que** des polyéther-siloxanes dans lesquels moins de 10 % en moles des radicaux R⁸ représentent H dans les radicaux R³ présents sont présents en tant que polyéther-siloxanes de type de polyéther-siloxane 2.

4. Composition selon l'une quelconque des revendications précédentes, **caractérisée en ce que** la proportion en masse de polyéther-siloxanes des types de polyéther-siloxane 1 et 2 dans la composition par rapport à 100 parties en masse de composant réactif avec les isocyanates, de préférence de composant polyol, (ppcp) est de 0,05 à 10 ppcp, de préférence de 0,1 à 5 ppcp et de manière particulièrement préférée de 0,1 à 3 ppcp.

5. Composition selon l'une quelconque des revendications précédentes, **caractérisée en ce que** le rapport en masse entre les polyéther-siloxanes de type de polyéther-siloxane 1 et les polyéther-siloxanes de type de polyéther-siloxane 2 dans la composition est de 0,2 sur 1 à 1 sur 0,2.

6. Composition selon l'une quelconque des revendications précédentes, **caractérisée en ce que** seuls des polyéther-siloxanes qui sont compris par les définitions des types de polyéther-siloxanes 1 ou 2 sont contenus dans la composition.

7. Composition selon l'une quelconque des revendications précédentes, pouvant être obtenue par combinaison de deux composants présents séparément ou plus, un des composants étant le composant réactif avec les isocyanates et l'autre étant le composant isocyanate, le composant réactif avec les isocyanates étant utilisé sous la forme d'un mélange contenant tous les polyéther-siloxanes du type de polyéther-siloxane 1.

8. Composition selon la revendication 7, **caractérisée en ce que** le composant réactif avec les isocyanates est utilisé sous la forme d'un mélange contenant tous les polyéther-siloxanes de types de polyéther-siloxane 1 et 2.

9. Composition selon la revendication 7, **caractérisée en ce que** le composant isocyanate est utilisé sous la forme d'un mélange contenant tous les polyéther-siloxanes de type de polyéther-siloxane 2.

10. Utilisation de compositions selon l'une quelconque des revendications précédentes pour la fabrication de mousses de polyuréthane ou de polyisocyanurate, de préférence de mousses dures.

11. Utilisation selon la revendication 10, **caractérisée en ce que** des mousses moulées de polyuréthane ou de polyisocyanurate qui comprennent des cavités et/ou des échancrures sont fabriquées.

12. Utilisation selon la revendication 10 ou 11, **caractérisée en ce qu'**un appareil de moussage par pulvérisation ou une tête de mélange est utilisé lors de la fabrication.

13. Mousse dure de polyuréthane ou de polyisocyanurate, pouvant être obtenue par mise en réaction d'une composition selon l'une quelconque des revendications 1 à 7.

14. Utilisation d'une mousse dure selon la revendication 13 en tant que ou pour la fabrication de panneaux isolants, de moyens d'isolation, de matériaux de remplissage, d'éléments composites métalliques, d'éléments de construction, de préférence pour la construction de bâtiments, de chambres de réfrigération, de contenants et de camions de réfrigération ou d'appareils de réfrigération.

15. Utilisation selon la revendication 14, **caractérisée en ce que** la mousse dure se présente sous la forme d'une mousse à pulvériser, qui est appliquée ou introduite directement sur la surface à isoler ou à remplir ou dans des cavités appropriées.
